# EUROPÄISCHE PATENTSCHRIFT

(11) **EP 4 380 748 B1**
(45) Veröffentlichungstag und Bekanntmachung des Hinweises auf die Patenterteilung: **09.10.2024**
(21) Anmeldenummer: 22758434.9
(22) Anmeldetag: 26.07.2022
(51) Int. Cl.: B23D 77/00, B23C 5/28, B23B 51/06, B23B 27/10

(54) **SCHNEIDEINSATZ UND WERKZEUG ZUR SPANENDEN BEARBEITUNG**
CUTTING INSERT AND TOOL FOR MACHINING
INSERT DE COUPE ET OUTIL D'USINAGE

(30) Priorität: 05.08.2021 DE 102021120357
(43) Veröffentlichungstag der Anmeldung: 12.06.2024
(73) Patentinhaber: Hartmetall-Werkzeugfabrik Paul Horn GmbH, 72072 Tübingen (DE)
(72) Erfinder: LUIK, Matthias, 72766 Reutlingen (DE)
(74) Vertreter: Witte, Weller & Partner Patentanwälte mbB
(86) Internationale Anmeldenummer: PCT/EP2022/070951
(87) Internationale Veröffentlichungsnummer: WO 2023/011987

(56) Entgegenhaltungen:
- DE-A1- 102010 002 669
- DE-U1- 202010 002 058
- US-A- 5 901 623
- US-A1- 2012 082 518
- US-A1- 2014 147 219
- US-A1- 2015 003 921
- US-A1- 2018 154 462

## Beschreibung

Die vorliegende Erfindung betrifft einen Schneideinsatz für ein Werkzeug zur spanenden Bearbeitung eines Werkstücks. Ferner betrifft die vorliegende Erfindung ein Werkzeug mit einem solchen Schneideinsatz.

Bei dem erfindungsgemäßen Werkzeug kann es sich beispielsweise um ein Reibwerkzeug handeln. Die vorliegende Erfindung ist jedoch nicht auf ein solches Reibwerkzeug beschränkt. Bei dem erfindungsgemäßen Werkzeug, in das der erfindungsgemäße Schneideinsatz eingesetzt wird, kann es sich auch um eine andere Art von Zerspanwerkzeug handeln, beispielsweise um ein Drehwerkzeug, ein Bohrerwerkzeug, ein Fräswerkzeug, etc. Das erfindungsgemäße Werkzeug wird vorzugsweise in einer Werkzeugmaschine, wie z.B. einem CNC-Bearbeitungszentrum, verwendet.

Das erfindungsgemäße Werkzeug weist neben dem Schneideinsatz einen Schneideinsatzhalter zum Halten des Schneideinsatzes auf. Vorzugsweise ist der Schneideinsatz in dem Schneideinsatzhalter lösbar befestigt, um diesen bei Verschließ austauschen zu können.

Ein zentrales Thema bei derartigen Werkzeugen ist die Realisierung eines möglichst guten Spanbruchs, um unerwünscht lange Späne bei der Bearbeitung zu vermeiden. Gute spanbrechende Eigenschaften führen nicht nur zu einer längeren Lebensdauer der in den Werkzeugen verwendeten Schneideinsätze, sondern wirken sich auch positiv auf die Oberflächenbeschaffenheit der bearbeiteten Werkstücke aus.

Zur Steigerung der Lebensdauer und Verbesserung der Prozesssicherheit ist es ferner notwendig, die Bearbeitungsstelle ausreichend mit Kühl-/Schmiermitteln (im Folgenden der Einfachheit halber als "Kühlmittel" bezeichnet) zu versorgen. Dementsprechend sind häufig Kühlmittelkanäle in das Werkzeug und/oder den Schneideinsatz integriert. Diese sollen sicherstellen, dass die am stärksten beanspruchten Bereiche des Werkzeugs im Einsatz zu jedem Zeitpunkt eine ausreichende Versorgung mit Kühlmittel erhalten.

Beispiele von spanabhebenden Werkzeugen mit integrierten Kühlmittelkanälen sind aus den folgenden Druckschriften bekannt: DE 10 2007 023 167 A1, DE 10 2010 002 669 A1, DE 10 2010 021 520 A1, DE 10 2010 051 377 A1, DE 20 2004 008 566 U1, EP 2 146 816 B1, EP 2 148 757 B1 und EP 2 550 126 B1.

Die DE 10 2010 002 669 A1, welche die Basis für den Oberbegriff des Anspruchs 1 bildet, zeigt ein drehantreibbares spanabhebendes Werkzeug mit integrierter Kühl-/Schmiermittelversorgung, das einen Schaft und einen mit dem Schaft verbundenen Schneidteil aufweist.

Es ist eine Aufgabe der vorliegenden Erfindung, einen Schneideinsatz für ein Werkzeug zur spanenden Bearbeitung sowie ein solches Werkzeug bereitzustellen, bei dem die spanbrechenden Eigenschaften und die Kühlmittelzufuhr weiter verbessert sind.

Erfindungsgemäß wird diese Aufgabe durch einen Schneideinsatz gemäss Anspruch 1 gelöst, der Folgendes aufweist:
- einen Einspannabschnitt, der mindestens einen als Durchgangsloch ausgestalteten Kühlmittelkanal aufweist;
- einen Schneidkopf mit mindestens einem Schneidkörper, der eine Hauptschneidkante, eine an die Hauptschneidkante angrenzende Spanfläche und eine von der Spanfläche abstehende oder in diese eingebrachte spanbrechende Geometrie aufweist, die dazu ausgestaltet ist, einen mit der Hauptschneidkante abgehobenen Span zu brechen; und
- einen Auslegerarm, der den Einspannabschnitt mit dem Schneidkopf verbindet und einen kleineren Durchmesser als der Einspannabschnitt hat;

wobei der Schneideinsatz monolithisch ausgestaltet ist, so dass der Einspannabschnitt, der Schneidkopf und der Auslegerarm integral miteinander verbunden sind; und
wobei ein Teil des Schneidkopfes, der die spanbrechende Geometrie aufweist, den Kühlmittelkanal in einer Draufsicht von vorne entlang einer Längsachse des Schneideinsatzes betrachtet zumindest 10% eines Querschnitts des Kühlmittelkanals, aber höchstens 80% des Querschnitts des Kühlmittelkanals (34) verdeckt.

Durch die an dem mindestens einen Schneidkörper vorgesehene Geometrie werden die Spanbrucheigenschaften des erfindungsgemäßen Schneideinsatzes enorm verbessert. Zudem sorgt die geometrische Überdeckung des Kühlmittelkanals mit dem Teil des Schneidkopfes, an dem die spanbrechende Geometrie angebracht ist, für eine optimale Kühlmittelzufuhr. Anders als dies bei Schneideinsätzen aus dem Stand der Technik häufig der Fall ist, wird dadurch nämlich gewährleistet, dass das Kühlmittel an die für die Spanbrucheigenschaften entscheidende Stelle des Schneideinsatzes gelangt. Der Großteil des aus dem Kühlmittelkanal austretenden Kühlmittels trifft damit nämlich direkt auf die spanbrechende Geometrie und spritzt nicht, wie dies sonst häufig der Fall ist, über den Schneidkörper des Schneideinsatzes hinweg oder an diesem seitlich vorbei.

Mit der genannten, in der Draufsicht von vorne auftretenden geometrischen Überdeckung des Kühlmittelkanals mit der spanbrechenden Geometrie wird zwar in Kauf genommen, dass der aus dem Kühlmittelkanal austretende Kühlmittelstrahl mit Teilen des Schneidkopfes kollidiert und hierdurch vom Schneidkopf teilweise abgelenkt wird. Es hat sich jedoch gezeigt, dass dies im Vergleich zu Schneideinsätzen und Werkzeugen, bei denen der Kühlmittelstrahl vorn komplett frei (d.h. unabgelenkt) über die Schneide spritzt, zu wesentlich verbesserten Spanbildungseigenschaften führt. Alles in allem lässt sich durch die erfindungsgemäße Ausgestaltung des Schneideinsatzes ein verbesserter Spanbruch sowie eine höhere Prozesssicherheit erreichen.

Die oben genannte Aufgabe ist somit vollständig gelöst.

Erfindungsgemäß ist der Schneideinsatz monolithisch, also aus einem Stück, ausgestaltet, so dass der Einspannabschnitt, der Schneidkopf und der Auslegerarm integral miteinander verbunden sind.

Dies erhöht die mechanische Stabilität des Schneideinsatzes, was insbesondere von Vorteil ist, wenn der Schneideinsatz vergleichsweise klein dimensioniert ist.

Gemäß einer weiteren Ausgestaltung ist es bevorzugt, dass der Auslegerarm den Kühlmittelkanal in der Draufsicht von vorne entlang der Längsachse des Schneideinsatzes betrachtet nicht überdeckt.

Dies hat den Vorteil, dass der aus dem Kühlmittelkanal austretende Kühlmittelstrahl aus dem Einspannabschnitt austritt und frei an den Schneidkopf gelangt, ohne mit dem Auslegerarm zu kollidieren oder von diesem abgelenkt zu werden. Dementsprechend behält der Kühlmittelstrahl bis zum Auftreffpunkt an der am Schneidkopf angeordneten spanbrechenden Geometrie einen Großteil seiner kinetischen Energie bei.

Gemäß einer weiteren Ausgestaltung ist es vorgesehen, dass die spanbrechende Geometrie von der Hauptschneidkante beabstandet angeordnet ist und ein erster Teil der Spanfläche entlang der Hauptschneidkante zwischen der spanbrechenden Geometrie und der Hauptschneidkante verläuft.

Hierdurch lässt sich ein positiver Spanwinkel realisieren, durch den die Spanbrucheigenschaften zusätzlich verbessert werden. Dies ist insbesondere bei Reibwerkzeugen oder anderen Zerspanwerkzeugen von Vorteil, bei denen typischerweise sehr dünne Späne auftreten. Ohne den erwähnten positiven Spanwinkel in Kombination mit der erfindungsgemäßen spanbrechenden Geometrie würde ein solch dünner Span ansonsten nicht ausreichend zuverlässig brechen. Dies kann zu einem Verkratzen der Oberfläche des Schneidkörpers und damit auch zu einem Verkratzen der Spanfläche führen, wodurch letztendlich der Verschleiß erhöht und die Lebensdauer des Schneideinsatzes verkürzt werden würde.

Gemäß einer weiteren Ausgestaltung weist der Schneidkörper ferner eine quer zu der Hauptschneidkante ausgerichtete Nebenschneidkante auf, wobei ein zweiter Teil der Spanfläche entlang der Nebenschneidkante zwischen der spanbrechenden Geometrie und der Nebenschneidkante verläuft.

Der Begriff "quer" beschreibt im vorliegenden Fall eine Ausrichtung der beiden Schneidkanten unter einem Winkel ungleich 0°. Die beiden Schneidkanten (Haupt- und Nebenschneidkante) sind vorzugsweise unter einem spitzen Winkel oder einem rechten Winkel zueinander ausgerichtet. Grundsätzlich ist jedoch auch eine Ausrichtung unter einem stumpfen Winkel zueinander möglich.

Die spanbrechende Geometrie ist gemäß der zuletzt genannten Ausgestaltung sowohl in Richtung der Hauptschneidkante als auch in Richtung der Nebenschneidkante vollständig durch die Spanfläche umschlossen, was zu den o.g. Vorteilen (positiver Spanwinkel, verbesserter Spanbruch und damit verlängerte Lebensdauer) führt.

Vorzugsweise ist sowohl die Hauptschneidkante als auch die Nebenschneidkante jeweils geradlinig (ungekrümmt) ausgestaltet.

Gemäß einer weiteren Ausgestaltung ist es vorgesehen, dass sich der Auslegerarm im Wesentlichen entlang der Längsachse des Schneideinsatzes erstreckt und der Schneidkörper quer dazu, seitlich von dem Schneidkopf absteht.

Vorzugsweise ist der Durchmesser des Auslegerarms bzw. dessen Querausdehnung (Ausdehnung quer zur Längsachse des Schneideinsatzes) dünner ausgestaltet als der entsprechende Durchmesser bzw. die entsprechende Querausdehnung des Schneidkopfes und des Einspannabschnitts.

Gemäß einer weiteren Ausgestaltung ist der der Kühlmittelkanal parallel zu der Längsachse des Schneideinsatzes ausgerichtet.

Der aus dem im Einspannabschnitt angeordneten Kühlmittelkanal austretende Kühlmittelstrahl verläuft somit parallel entlang des Auslegerarms und trifft parallel zur Längsachse des Schneideinsatzes im Bereich der spanbrechenden Geometrie auf den Schneidkörper auf.

Bei dieser Art der Ausrichtung des Kühlmittelstrahls und der einzelnen Bauteile des Schneideinsatzes relativ zueinander ist es ferner bevorzugt, dass der Einspannabschnitt an seiner Außenseite mindestens eine Einspannfläche aufweist, die parallel zu der Längsachse des Schneideinsatzes ausgerichtet ist.

Gemäß einer weiteren Ausgestaltung ist es bevorzugt, dass die spanbrechende Geometrie als erhabene Geometrie ausgestaltet ist, die von der Spanfläche absteht.

Die spanbrechende Geometrie ragt in diesem Fall also nach oben aus der Spanfläche hervor. Hierdurch werden die spanbrechenden Eigenschaften zusätzlich verbessert.

Erfindungsgemäß verdeckt der Teil des Schneidkopfes, der die spanbrechende Geometrie aufweist, in der Draufsicht von vorne entlang der Längsachse des Schneideinsatzes betrachtet zumindest 10% eines Querschnitts des Kühlmittelkanals, aber höchstens 80% des Querschnitts des Kühlmittelkanals (34).

Diese Überdeckung ermöglicht, wie bereits erwähnt, eine optimale Versorgung des mindestens einen Schneidkörpers, insbesondere der darin angeordneten spanbrechenden Geometrie und Spanfläche, mit Kühl-/Schmiermittel.

Würde der Schneidkopf mehr als 80% des Querschnitts des Kühlmittelkanals verdecken, wäre keine ausreichende Kühlung und Schmierung des mindestens einen Schneidkörpers mehr gewährleistet, da bereits ein Großteil des Kühlmittels dann bereits vorher an anderer Stelle mit dem Schneidkopf kollidiert.

In einer weiteren Ausgestaltung ist es vorgesehen, dass eine Mittelachse des Kühlmittelkanals parallel zu einem Oberflächenabschnitt der spanbrechenden Geometrie ausgerichtet ist oder mit diesem Oberflächenabschnitt in einer Ebene liegt.

Hierdurch kommt es zu einem parallelen oder sogar tangentialen Auftreffen des Kühlmittelstrahls auf den genannten Oberflächenabschnitt der spanbrechenden Geometrie. Dies führt zu optimaler Kühlung und Schmierung des mindestens einen Schneidkörpers. Ebenso wird die Spanabfuhr durch diese Art der Ausrichtung des Kühlmittelstrahls verbessert.

Gemäß einer weiteren Ausgestaltung ist ein Querschnitt des Kühlmittelkanals unrund. Selbstverständlich kann der Querschnitt des Kühlmittelkanals auch rund (kreisförmig) ausgestaltet sein.

Durch eine unrunde Ausgestaltung, z.B. durch eine elliptische oder ovale Ausgestaltung des Kühlmittelkanalquerschnitts, lässt sich der Kühlmittelstrahl noch besser auf den zumindest einen Schneidkörper ausrichten.

Gemäß einer weiteren Ausgestaltung ist ein Querschnitt des Kühlmittelkanals an einem dem Schneidkopf abgewandten ersten Ende des Kühlmittelkanals größer als an einem dem Schneidkopf zugewandten zweiten Ende des Kühlmittelkanals. Der Kühlmittelkanal kann gemäß dieser Ausgestaltung beispielsweise konisch zulaufend ausgestaltet sein. Alternativ dazu kann der Kühlmittelkanal in seinem Inneren als abgesetzte Bohrung mit Abschnitten unterschiedlichen Durchmessers ausgestaltet sein.

Eine Abnahme des Kühlmittelkanal-Durchmessers von seinem ersten Ende zu seinem zweiten Ende bewirkt eine Art Düseneffekt, durch den sich die Austrittsgeschwindigkeit des Kühlmittelkanals steigern lässt. Dies ist wiederum in Bezug auf eine verbesserte Spanabfuhr von Vorteil.

Ein Ausführungsbeispiel der Erfindung ist in den Zeichnungen dargestellt. Es zeigen:
- Fig. 1: eine perspektivische Ansicht eines Ausführungsbeispiels des erfindungsgemäßen Schneideinsatzes;
- Fig. 2: eine Seitenansicht eines Ausführungsbeispiels des erfindungsgemäßen Werkzeugs mit dem erfindungsgemäßen Schneideinsatz und einem Schneideinsatzhalter, der schematisch und geschnitten dargestellt ist:
- Fig. 3: eine Teilansicht eines Schneidkopfes des erfindungsgemäßen Schneideinsatzes aus Fig. 1;
- Fig. 4: eine Detailansicht eines Schneidkörpers des in Fig. 3 dargestellten Schneidkopfes;
- Fig. 5: eine Draufsicht von vorne auf den in Fig. 1 dargestellten Schneideinsatz; und
- Fig. 6: ein Detail aus Fig. 5

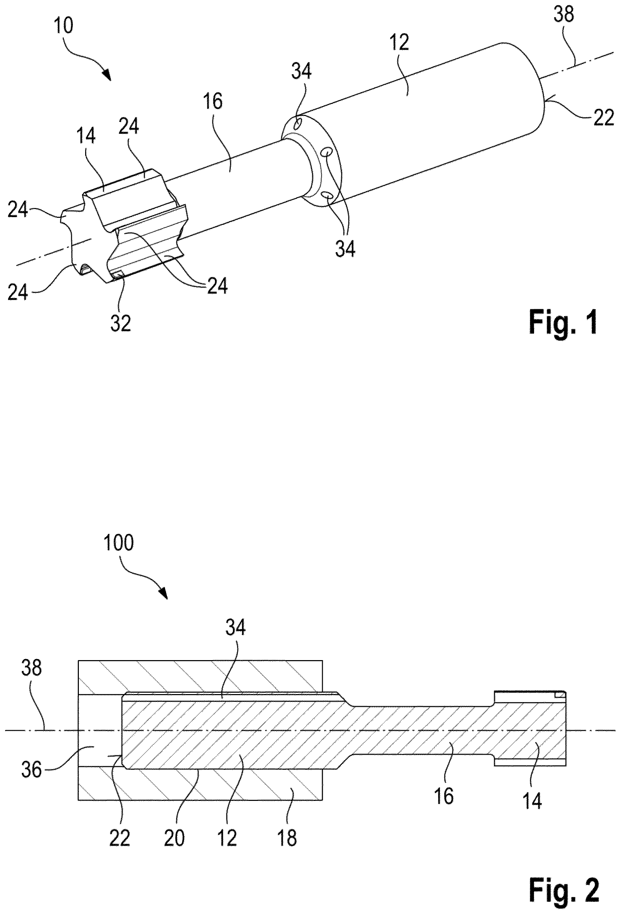

Fig. 1 und 3-6 zeigen ein Ausführungsbeispiel des erfindungsgemäßen Schneideinsatzes in verschiedenen Ansichten. Der Schneideinsatz ist darin in seiner Gesamtheit mit der Bezugsziffer 10 gekennzeichnet. Fig. 2 zeigt ein Ausführungsbeispiel des erfindungsgemäßen Werkzeugs, das den Schneideinsatz und einen dazugehörigen Schneideinsatzhalter aufweist. Das Werkzeug ist in seiner Gesamtheit mit der Bezugsziffer 100 gekennzeichnet.

Bei dem in Fig. 1 gezeigten Schneideinsatz 10 handelt es sich um einen Schneideinsatz für ein Reibwerkzeug. Der Schneideinsatz 10 weist einen Einspannabschnitt 12, einen Schneidkopf 14 sowie einen Auslegerarm 16 auf. Der Schneideinsatz 10 ist monolithisch ausgestaltet. Er besteht also aus einem Stück, wobei der Einspannabschnitt 12, der Schneidkopf 14 und der Auslegerarm 16 integral miteinander verbunden sind. Der Schneidkopf 10 ist vorzugsweise gesamthaft aus Hartmetall gefertigt.

Der Einspannabschnitt 12 dient der Einspannung des Schneideinsatzes 10 in einem Schneideinsatzhalter 18 (siehe Fig. 2). In dem vorliegend gezeigten Ausführungsbeispiel ist der Einspannabschnitt zylindrisch ausgestaltet. Dementsprechend hat auch die im Schneideinsatzhalter 18 vorgesehene Schneideinsatzaufnahme 20 einen zylindrischen Querschnitt. Es versteht sich jedoch, dass der Einspannabschnitt 12 und die Schneideinsatzaufnahme 20 beliebige andere Querschnittsformen haben können (z.B. rechteckig, quadratisch, oval oder komplex geformt).

Die in dem Schneideinsatzhalter 18 vorgesehene Schneideinsatzaufnahme 20 ist vorzugsweise als topfförmige Aufnahme ausgestaltet, in die der Schneideinsatz 10 von der Vorderseite einführbar ist. Schrauben oder sonstige Befestigungsmittel können vorgesehen sein, um den Schneideinsatz 10 in der Schneideinsatzaufnahme 20 zu fixieren. In montiertem Zustand liegt der Einspannabschnitt 12 des Schneideinsatzes 10 vorzugsweise entlang seines Umfangs als auch mit seiner stirnseitigen Rückseite 22 an entsprechenden Gegenanlageflächen in der Schneideinsatzaufnahme 20 an. Anstelle einer vollflächigen Anlage kann auch eine teilflächige Anlage am Umfang des Einspannabschnitts 12 vorgesehen sein.

Der Schneideinsatzhalter 18 ist in Fig. 2 schematisch dargestellt. Bei dem Schneideinsatzhalter 18 kann es sich um einen gewöhnlichen Werkzeughalter handeln. Ebenso kann der Schneideinsatzhalter 18 auch ein Teil einer Werkzeugmaschine sein, in der der Schneideinsatz 10 zum Einsatz kommt. Beispielsweise handelt es sich in letzterem Fall bei dem Schneideinsatzhalter 18 um ein in der Werkzeugmaschine direkt integriertes Einspannfutter.

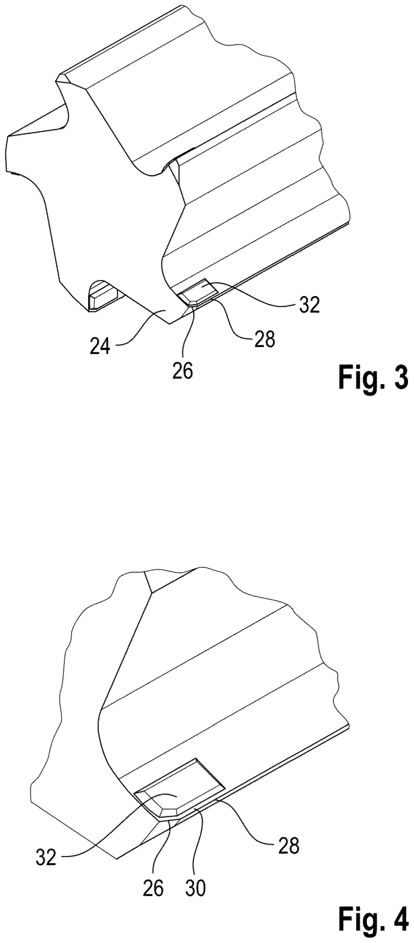

Der Schneidkopf 14 weist in dem vorliegend gezeigten Ausführungsbeispiel fünf Schneidkörper 24 auf, die seitlich von dem Schneidkopf 14 abstehen. Jeder dieser Schneidkörper 24 weist eine Hauptschneidkante 26 sowie eine an die Hauptschneidkante 26 angrenzende, quer dazu verlaufende Nebenschneidkante 28 auf (siehe Fig. 3-4). Die Hauptschneidkante 26 und die Nebenschneidkante 28 sind in dem vorliegend gezeigten Ausführungsbeispiel jeweils als geradlinige Schneidkanten ausgestaltet. An die Haupt- und Nebenkanten 26, 28 grenzt nach innen hin eine Spanfläche 30 an, die insbesondere in dem in Fig. 4 dargestellten Detail ersichtlich ist.

Auf der Spanfläche 30 ist eine spanbrechende Geometrie 32 angeordnet, welche in der Praxis häufig auch als Spanleitstufe bezeichnet wird.

Die spanbrechende Geometrie 32 ist dazu ausgestaltet, einen mit der Hauptschneidkante 26 abgehobenen Span (nicht dargestellt) zu brechen. Dies erfolgt im Wesentlichen durch Spanumformung. Der an der Hauptschneidkante 26 abgehobene Span wird mithilfe der spanbrechenden Geometrie 32 abgelenkt, wodurch er noch stärker gekrümmt und dadurch zum Brechen gezwungen wird.

Die spanbrechende Geometrie 32 ist in dem vorliegend gezeigten Ausführungsbeispiel als eine erhabene Geometrie ausgestaltet, die von der Spanfläche 30 nach oben hin absteht. Grundsätzlich ist es jedoch auch möglich, die spanbrechende Geometrie als vertiefte Struktur auszugestalten, die in die Spanfläche 30 eingebracht ist.

Je nach Art der Verwendung und Ausgestaltung des Schneideinsatzes 10 kann der Schneidkopf 14 auch mehr oder weniger als fünf dieser Schneidkörper 24 aufweisen. Beispielsweise kann der Schneidkopf 14 des erfindungsgemäßen Schneideinsatzes 10 auch nur einen Schneidkörper 24 aufweisen. Dies ist insbesondere bei der Verwendung des erfindungsgemäßen Schneideinsatzes 10 in einem Drehwerkzeug meist der Fall. Es versteht sich, dass der Schneidkopf 14 bei einer Verwendung als Drehwerkzeug-Schneideinsatz ganz anders geformt ist als in dem vorliegend gezeigten Ausführungsbeispiel.

In dem Einspannabschnitt 12 sind - der Anzahl an Schneidkörpern 24 entsprechend - in dem vorliegenden Ausführungsbeispiel fünf Kühlmittelkanäle 34 angeordnet, die der Kühlmittelzufuhr an den Schneidkopf 14 dienen. Aus diesen Kühlmittelkanälen 34 tritt jeweils ein Kühlmittelstrahl aus, der auf jeweils einem der Schneidkörper 24 ausgerichtet ist. Diese Kühlmittelstrahlen treffen vorzugsweise als freie Strahlen auf den Schneidkopf 14, ohne dabei von dem Auslegerarm 16 ab- bzw. umgelenkt zu werden. Der Auslegerarm 16, der den Einspannabschnitt 12 mit dem Schneidkopf 14 verbindet, weist daher vorzugsweise einen geringeren Durchmesser auf als der Einspannabschnitt 12 und der Schneidkopf 14. Der Auslegerarm 16 erstreckt sich im Wesentlichen entlang der Längsachse 38 des Schneideinsatzes 10.

Die Kühlmittelzufuhr in die einzelnen Kühlmittelkanäle 34 erfolgt über den Schneideinsatzhalter 18. Beispielsweise ist hierzu ein Kühlmittelkanal 36 im Schneideinsatzhalter 18 vorgesehen, der alle im Schneideinsatz 10 vorgesehenen Kühlmittelkanäle 34 gesamthaft speist. Alternativ dazu können aber auch im Schneideinsatzhalter 18 mehrere Kühlmittelkanäle 36 vorgesehen sein, die die im Schneideinsatz 10 vorgesehenen Kühlmittelkanäle 34 einzeln speisen. Auch an dieser Stelle sei nochmals angemerkt, dass im Falle einer Ausgestaltung des Schneidkopfes mit nur einem einzigen Schneidkörper 24 vorzugsweise auch nur ein Kühlmittelkanal im Inneren des Einspannabschnitts 12 vorgesehen ist.

Jeder der Kühlmittelkanäle 34 verläuft vorzugsweise parallel zu der Längsachse 38 des Schneideinsatzes 10. Jeder der Kühlmittelkanäle 34 ist als Durchgangsloch ausgestaltet, das den Einspannabschnitt 12 durchdringt. Das jeweilige Durchgangsloch hat eine umfangsseitig vollständig geschlossene Kontur. Die Kühlmittelkanäle 34 sind also jeweils umfangsseitig geschlossen, so dass seitlich kein Kühlmittel aus dem Einspannabschnitt 12 des Schneideinsatzes 10 austreten kann.

Im Folgenden wird näher auf die Anordnung der Kühlmittelkanäle 34 relativ zu den Schneidkörpern 24 eingegangen. Dies erfolgt am Beispiel eines Kühlmittelkanals 34 bzw. eines Schneidkopfes 24.

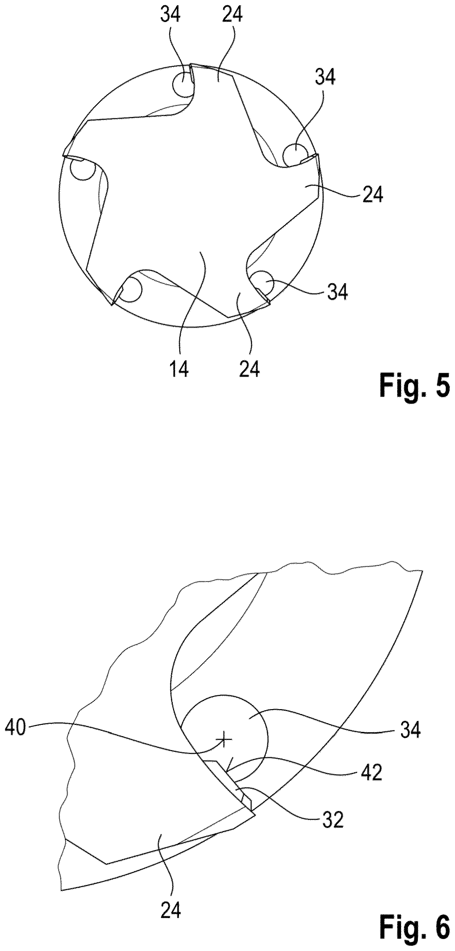

Der Kühlmittelkanal 34 ist derart angeordnet, dass er in der Draufsicht von vorne auf den Schneideinsatz, wie er in Fig. 5 und 6 dargestellt ist, zumindest teilweise durch den ihm zugeordneten Schneidkörper 24 verdeckt ist. Der Kühlmittelkanal 34 ist dabei insbesondere durch den Teil des Schneidkörpers 24 verdeckt, an dem die spanbrechende Geometrie 32 angeordnet ist. Vorzugsweise verdeckt der Teil des Schneidkörpers 24, welcher die spanbrechende Geometrie 32 aufweist, in der Draufsicht von vorne entlang der Längsachse 38 des Schneideinsatzes 10 betrachtet zumindest 10% des Querschnitts des Kühlmittelkanals 24, aber höchstens 80% des Querschnitts des Kühlmittelkanals 34. Hierdurch wird eine optimale Kühlung und Schmierung der bei der zerspanenden Bearbeitung verwendeten Teile des Schneidkopfes 14 gewährleistet.

Der Schneidkörper 24 wie auch die daran angeordnete spanbrechende Geometrie 32 sind vorzugsweise radial nach außen relativ zu dem Kühlmittelkanal 34 versetzt angeordnet. Besonders bevorzugt ist es, wenn eine Mittelachse 40 des Kühlmittelkanals 34 parallel zu einem Oberflächenabschnitt 42 der spanbrechenden Geometrie ausgerichtet ist. Der genannte Oberflächenabschnitt 42, der sich auf der Oberseite der spanbrechenden Geometrie 32 befindet, kann auch in einer Ebene mit der Mittelachse 40 des Kühlmittelkanals 34 angeordnet sein.

Zwar trifft ein Teil des aus dem Kühlmittelkanal 34 austretenden Kühlmittelstrahls aufgrund der genannten Verdeckung des Kühlmittelkanals 34 auf die Rückseite des Schneidkopfes 14 auf. Nichtsdestotrotz hat sich herausgestellt, dass eine derartige Anordnung des Kühlmittelkanals 34 relativ zu dem Schneidkopf 14 für eine optimale Kühlung und Schmierung und ebenso auch eine optimale Spanabfuhr sorgt, da der Schneidkopf 14 bzw. dessen Schneidkörper 24 auf diese Weise von dem Kühlmittel optimal umströmt werden.

Diverse weitere Optimierungen des Schneideinsatzes 10 sind möglich. Der Kühlmittelkanal 34 muss nicht zwangsläufig mit einem kreisrunden Querschnitt ausgestaltet sein. Auch ovale oder elliptische Querschnitte sind beispielsweise denkbar, um den Kühlmittelstrahl möglichst "flach" auszubilden. Ferner kann es vorgesehen sein, dass sich der Querschnitt des Kühlmittelkanals 34 von seinem ersten, dem Schneidkopf 14 abgewandten Ende hin zu seinem zweiten, dem Schneidkopf 14 zugewandten Ende verjüngt. Dadurch entsteht eine Art Düseneffekt, durch den das Kühlmittel innerhalb des Kühlmittelkanals 34 beschleunigt wird. Alternativ dazu kann der Kühlmittelkanal 34 in seinem Inneren auch abgesetzt bzw. abgestuft sein, so dass er beispielsweise einen an das erste Ende angrenzenden ersten Abschnitt größeren Durchmessers aufweist sowie einen an das zweite Ende angrenzenden zweiten Abschnitt kleineren Durchmessers aufweist. Diverse weitere Anpassungen, insbesondere an der Form des Schneidkopfes 14 sind, wie bereits erwähnt, je nach Verwendungszweck des Schneideinsatzes 10 ebenso möglich.

## Patentansprüche

1. Schneideinsatz (10) für ein Werkzeug (100) zur spanenden Bearbeitung eines Werkstücks, wobei der Schneideinsatz (10) Folgendes aufweist:
- einen Einspannabschnitt (12), der mindestens einen als Durchgangsloch ausgestalteten Kühlmittelkanal (34) aufweist;
- einen Schneidkopf (14) mit mindestens einem Schneidkörper (24), der eine Hauptschneidkante (26) und eine an die Hauptschneidkante (26) angrenzende Spanfläche (30) aufweist; und
- einen Auslegerarm (16), der den Einspannabschnitt (12) mit dem Schneidkopf (14) verbindet und einen kleineren Durchmesser als der Einspannabschnitt (12) hat;
wobei der Schneideinsatz (10) monolithisch ausgestaltet ist, so dass der Einspannabschnitt (12), der Schneidkopf (14) und der Auslegerarm (16) integral miteinander verbunden sind;
**dadurch gekennzeichnet, dass** der Schneidkörper (24) eine von der Spanfläche (30) abstehende oder in diese eingebrachte spanbrechende Geometrie (32) aufweist, die dazu ausgestaltet ist, einen mit der Hauptschneidkante (26) abgehobenen Span zu brechen,
wobei ein Teil des Schneidkopfes (14), der die spanbrechende Geometrie (32) aufweist, den Kühlmittelkanal (34) in einer Draufsicht von vorne entlang einer Längsachse (38) des Schneideinsatzes (10) betrachtet zumindest 10% eines Querschnitts des Kühlmittelkanals, aber höchstens 80% des Querschnitts des Kühlmittelkanals (34) verdeckt.

2. Schneideinsatz nach Anspruch 1, wobei der Auslegerarm (16) den Kühlmittelkanal (34) in der Draufsicht von vorne entlang der Längsachse (38) des Schneideinsatzes (10) betrachtet nicht überdeckt.

3. Schneideinsatz nach Anspruch 1 oder 2, wobei die spanbrechende Geometrie (32) von der Hauptschneidkante (26) beabstandet angeordnet ist und ein erster Teil der Spanfläche (30) entlang der Hauptschneidkante (26) zwischen der spanbrechenden Geometrie (32) und der Hauptschneidkante (26) verläuft.

4. Schneideinsatz nach Anspruch 3, wobei der Schneidkörper (24) ferner eine quer zu der Hauptschneidkante (26) ausgerichtete Nebenschneidkante (28) aufweist, und wobei ein zweiter Teil der Spanfläche (30) entlang der Nebenschneidkante (28) zwischen der spanbrechenden Geometrie (32) und der Nebenschneidkante (28) verläuft.

5. Schneideinsatz nach Anspruch 4, wobei die Hauptschneidkante (26) und/oder die Nebenschneidkante (28) geradlinig ausgestaltet ist.

6. Schneideinsatz nach einem der Ansprüche 1-5, wobei sich der Auslegerarm (16) im Wesentlichen entlang der Längsachse (38) des Schneideinsatzes (10) erstreckt und der Schneidkörper (24) quer dazu, seitlich von dem Schneidkopf (14) absteht.

7. Schneideinsatz nach einem der Ansprüche 1-6, wobei der Kühlmittelkanal (34) parallel zu der Längsachse (38) des Schneideinsatzes (10) ausgerichtet ist.

8. Schneideinsatz nach einem der Ansprüche 1-7, wobei die spanbrechende Geometrie als erhabene Geometrie (32) ausgestaltet ist, die von der Spanfläche (30) absteht.

9. Schneideinsatz nach einem der Ansprüche 1-8, wobei eine Mittelachse (40) des Kühlmittelkanals (34) parallel zu einem Oberflächenabschnitt (42) der spanbrechenden Geometrie (32) ausgerichtet ist oder mit diesem Oberflächenabschnitt (42) in einer Ebene liegt.

10. Schneideinsatz nach einem der Ansprüche 1-9, wobei ein Querschnitt des Kühlmittelkanals (34) unrund ist.

11. Schneideinsatz nach einem der Ansprüche 1-10, wobei ein Querschnitt des Kühlmittelkanals (34) an einem dem Schneidkopf (14) abgewandten ersten Ende des Kühlmittelkanals (34) größer als an einem dem Schneidkopf (14) zugewandten zweiten Ende des Kühlmittelkanals (34) ist.

12. Werkzeug (100) zur spanenden Bearbeitung eines Werkstücks, mit einem Schneideinsatz (10) nach einem der Ansprüche 1-11 und einem Schneideinsatzhalter (18) zum Halten des Schneideinsatzes (10).

## Claims

1. A cutting insert (10) for a tool (100) for machining a workpiece, wherein the cutting insert (10) comprises:
- a clamping section (12) which comprises at least one coolant channel (34) which is configured as a through-hole;
- a cutting head (14) having at least one cutting member (24) which comprises a main cutting edge (26) and a rake face (30) which adjoins the main cutting edge (26); and
- a cantilever arm (16) which connects the clamping section (12) to the cutting head (14) and which has a smaller diameter than the clamping section (12);
wherein the cutting insert (10) is configured in a monolithic manner so that the clamping section (12), the cutting head (14) and the cantilever arm (16) are integrally connected to each other;
**characterized in that** the cutting member (24) comprises a chip-breaking geometry (32) which protrudes from the rake face (30) or which is introduced into the rake face and which is configured to break a chip which is machined with the main cutting edge (26),
wherein a portion of the cutting head (14) comprising the chip-breaking geometry (32), when viewed in a plan view from the front side along the longitudinal axis (38) of the cutting insert (10), covers at least 10% of a cross section of the coolant channel, but a maximum of 80% of the cross section of the coolant channel (34).

2. The cutting insert as claimed in claim 1, wherein the cantilever arm (16) does not cover the coolant channel (34) when viewed in the plan view from the front side along the longitudinal axis (38) of the cutting insert (10).

3. The cutting insert as claimed in claim 1 or 2, wherein the chip-breaking geometry (32) is spaced apart from the main cutting edge (26) and a first portion of the rake face (30) extends along the main cutting edge (26) between the chip-breaking geometry (32) and the main cutting edge (26).

4. The cutting insert as claimed in claim 3, wherein the cutting member (24) further comprises an auxiliary cutting edge (28) which is orientated transversely relative to the main cutting edge (26), and wherein a second portion of the rake face (30) extends along the auxiliary cutting edge (28) between the chip-breaking geometry (32) and the auxiliary cutting edge (28).

5. The cutting insert as claimed in claim 4, wherein the main cutting edge (26) and/or the auxiliary cutting edge (28) is rectilinear.

6. The cutting insert as claimed in one of claims 1-5, wherein the cantilever arm (16) extends substantially along the longitudinal axis (38) of the cutting insert (10) and the cutting member (24) protrudes transversely relative thereto, laterally from the cutting head (14).

7. The cutting insert as claimed in one of claims 1-6, wherein the coolant channel (34) is orientated parallel to the longitudinal axis (38) of the cutting insert (10).

8. The cutting insert as claimed in one of claims 1-7, wherein the chip-breaking geometry is configured as a raised geometry (32) which protrudes from the rake face (30).

9. The cutting insert as claimed in one of claims 1-8, wherein a center axis (40) of the coolant channel (34) is orientated parallel to a surface portion (42) of the chip-breaking geometry (32) or is located in a plane with this surface portion (42).

10. The cutting insert as claimed in one of claims 1-9, wherein a cross section of the coolant channel (34) is non-round.

11. The cutting insert as claimed in one of claims 1-10, wherein a cross section of the coolant channel (34) at a first end, facing away from the cutting head (14), of the coolant channel (34) is larger than at a second end, facing the cutting head (14), of the coolant channel (34).

12. A tool (100) for machining a workpiece, having a cutting insert (10) as claimed in one of claims 1-11 and a cutting insert holder (18) for holding the cutting insert (10).

## Revendications

1. Dispositif de coupe (10) pour un outil (100) permettant l'usinage par enlèvement de copeaux d'une pièce, dans lequel le dispositif de coupe (10) présente les éléments suivants :
- une section de serrage (12) qui présente au moins un canal d'agent de refroidissement (34) conçu sous forme de trou de passage ;
- une tête de coupe (14) comportant au moins un corps de coupe (24) qui présente une arête de coupe principale (26) et une face d'attaque (30) adjacente à l'arête de coupe principale (26) ;
et
- un bras radial (16) reliant la section de serrage (12) à la tête de coupe (14) et ayant un diamètre plus petit que celui de la section de serrage (12) ;
dans lequel le dispositif de coupe (10) est conçu de manière monolithique, de sorte que la section de serrage (12), la tête de coupe (14) et le bras radial (16) sont intégralement reliés les uns aux autres ;
**caractérisé en ce que** le corps de coupe (24) présente une géométrie brise-copeaux (32) qui fait saillie depuis la face d'attaque (30) ou est introduite dans celle-ci, laquelle géométrie est conçue pour briser un copeau détaché par l'arête de coupe principale (26),
dans lequel une partie de la tête de coupe (14), laquelle partie présente la géométrie brise-copeaux (32), recouvre le canal d'agent de refroidissement (34), vu dans une vue de dessus, de face, le long d'un axe longitudinal (38) du dispositif de coupe (10), sur au moins 10 % d'une section transversale du canal d'agent de refroidissement, mais au maximum sur 80 % de la section transversale du canal d'agent de refroidissement (34).

2. Dispositif de coupe selon la revendication 1, dans lequel le bras radial (16) ne recouvre pas le canal d'agent de refroidissement (34) vu dans la vue de dessus, de face, le long de l'axe longitudinal (38) du dispositif de coupe (10).

3. Dispositif de coupe selon la revendication 1 ou 2, dans lequel la géométrie brise-copeaux (32) est disposée à distance de l'arête de coupe principale (26) et une première partie de la face d'attaque (30) s'étend le long de l'arête de coupe principale (26) entre la géométrie brise-copeaux (32) et l'arête de coupe principale (26).

4. Dispositif de coupe selon la revendication 3, dans lequel le corps de coupe (24) présente en outre une arête de coupe secondaire (28) orientée transversalement à l'arête de coupe principale (26), et dans lequel une seconde partie de la face d'attaque (30) s'étend le long de l'arête de coupe secondaire (28) entre la géométrie brise-copeaux (32) et l'arête de coupe secondaire (28).

5. Dispositif de coupe selon la revendication 4, dans lequel l'arête de coupe principale (26) et/ou l'arête de coupe secondaire (28) sont conçues de manière rectiligne.

6. Dispositif de coupe selon l'une des revendications 1 à 5, dans lequel le bras radial (16) s'étend sensiblement le long de l'axe longitudinal (38) du dispositif de coupe (10) et le corps de coupe (24) fait saillie transversalement à celui-ci, latéralement depuis la tête de coupe (14).

7. Dispositif de coupe selon l'une des revendications 1 à 6, dans lequel le canal d'agent de refroidissement (34) est orienté parallèlement à l'axe longitudinal (38) du dispositif de coupe (10).

8. Dispositif de coupe selon l'une des revendications 1 à 7, dans lequel la géométrie brise-copeaux est conçue sous forme de géométrie en relief (32) qui fait saillie depuis la face d'attaque (30).

9. Dispositif de coupe selon l'une des revendications 1 à 8, dans lequel un axe central (40) du canal d'agent de refroidissement (34) est orienté parallèlement à une section de surface (42) de la géométrie brise-copeaux (32) ou est dans un plan avec ladite section de surface (42).

10. Dispositif de coupe selon l'une des revendications 1 à 9, dans lequel une section transversale du canal d'agent de refroidissement (34) est non circulaire.

11. Dispositif de coupe selon l'une des revendications 1 à 10, dans lequel une section transversale du canal d'agent de refroidissement (34) est plus grande au niveau d'une première extrémité du canal d'agent de refroidissement (34) opposée à la tête de coupe (14) qu'au niveau d'une seconde extrémité du canal d'agent de refroidissement (34) tournée vers la tête de coupe (14).

12. Outil (100) permettant l'usinage par enlèvement de copeaux d'une pièce, comportant un dispositif de coupe (10) selon l'une des revendications 1 à 11 et un élément de maintien de dispositif de coupe (18) permettant le maintien du dispositif de coupe (10).
